# EUROPÄISCHE PATENTSCHRIFT

(11) **EP 3 507 096 B1**
(45) Veröffentlichungstag und Bekanntmachung des Hinweises auf die Patenterteilung: **09.12.2020**
(21) Anmeldenummer: 17755125.6
(22) Anmeldetag: 11.08.2017
(51) Int. Cl.: B41F 15/08, B41F 17/00, B41F 17/08, B41F 33/16

(54) **BEARBEITUNGSMASCHINE MIT MEHREREN BEARBEITUNGSSTATIONEN ZUM BEARBEITEN VON KÖRPERN**
PROCESSING MACHINE WITH SEVERAL STATIONS FOR PROCESSING BODIES
MACHINE DE TRAITEMENT AVEC PLUSIEURS STATIONS DE TRAITEMENT DE CORPS

(30) Priorität: 01.09.2016 DE 102016216514; 13.09.2016 DE 102016217376
(43) Veröffentlichungstag der Anmeldung: 10.07.2019
(73) Patentinhaber: Koenig & Bauer Kammann GmbH, 32584 Löhne (DE)
(72) Erfinder: JERETZKY, Gerald, 32609 Hüllhorst (DE)
(74) Vertreter: Koenig & Bauer AG
(86) Internationale Anmeldenummer: PCT/EP2017/070442
(87) Internationale Veröffentlichungsnummer: WO 2018/041603

(56) Entgegenhaltungen:
- EP-A1- 1 447 219
- EP-A1- 2 995 453
- EP-A2- 0 425 967
- DE-A1-102008 029 299
- DE-U1- 20 023 777
- US-A- 5 996 486

## Beschreibung

Die Erfindung betrifft eine Bearbeitungsmaschine mit mehreren Bearbeitungsstationen zum Bearbeiten von Körpern gemäß Anspruch 1.

Unter dem Begriff "Körper" soll ein dreidimensionales Objekt verstanden werden, das eine Masse hat und einen Raum einnimmt. Körper bestehen aus Materie. Festkörper haben eine feste Form und können durch Grenzflächen beschrieben werden. Die vorliegende Erfindung bezieht sich vornehmlich auf eine Bearbeitungsmaschine zum Bearbeiten von Rundkörpern, insbesondere von Hohlkörpern.

Durch die DE 200 23 777 U1 ist eine bahnverarbeitende Maschine mit einem Transportsystem zur Zuführung einer zu bearbeitenden Bahn an wenigstens eine Bearbeitungsstation bekannt, mit Stellelementen zum Transport und/oder zur Bearbeitung der Bahn, wobei ein Stellelement mittels eines Antriebs und eines Übertragungselements getrieben ist, wobei eine Messanordnung vorgesehen ist, mittels derer während einer Einlernphase positionsabhängige Ausgangsgrößen des Übertragungselements in Abhängigkeit von vorgegebenen positionsabhängigen Eingangsgrößen bestimmbar sind, und wobei Mittel zur Speicherung von aus den positionsabhängigen Ausgangsgrößen ermittelten Korrekturwerten für die während der auf den Einlernvorgang folgenden Betriebsphase verwendeten Eingangsgrößen vorgesehen sind.

Durch die EP 2 100 733 A1 ist eine Lineardruckmaschine mit austauschbaren Druckmodulen zum Bedrucken von Hohlkörpern bekannt, aufweisend: a) eine Transporteinrichtung mit einem Antrieb, mit der die zu bedruckenden Hohlkörper durch die Lineardruckmaschine transportiert werden, b) zumindest eine erste Druckstation und eine in Förderrichtung der Hohlkörper nach der ersten Druckstation angeordnete zweite Druckstation, c) zumindest eine Trocknungsstation zum Trocknen der Farbe auf den bedruckten Hohlkörpern und d) eine Maschinensteuerung, die zumindest den Transport der Hohlkörper durch die Lineardruckmaschine steuert, e) wobei jede der Druckstationen vorbereitet ist, ein Druckmodul mit eigenen Antrieb aufzunehmen und wobei das Druckmodul über eine Schnittstelle mit der Maschinensteuerung verbindbar ist, f) wobei die Druckmodule die Hohlkörper mit einem Druckverfahren aus Siebdruck und/oder Flexodruck und/oder Offsetdruck und/oder Kaltprägen und/oder Heißprägen und/oder Lasercolortransfer und/oder Inkjet bedrucken.

Durch die EP 0 298 313 A2 ist ein Verfahren zum serienweisen Beschichten von Werkstücken bekannt, wobei die Werkstücke längs einer vorgegebenen Förderbahn von einer Fördereinrichtung durch eine Beschichtungsstation geführt werden, in der unter Relativbewegung zwischen dem Werkstück und einer insbesondere an einem Industrieroboter montierten Sprühvorrichtung deren Lage bezüglich des Werkstücks von einem gespeicherten Bearbeitungsprogramm gesteuert wird, das zuvor während eines ursprünglichen Beschichtungsvorgangs beim fehlerfreien Beschichten eines Werkstücks erstellt wurde, wobei während des ursprünglichen Beschichtungsvorgangs die Entfernung zwischen mindestens einem Bezugspunkt der Sprühvorrichtung und mindestens einem ausgewählten Punkt des Werkstücks gemessen und als Standardmesswert gespeichert wird, wobei bei dem anschließenden serienweisen Zuführen des Werkstücks jeweils die Entfernung zwischen dem Bezugspunkt und dem ausgewählten Punkt der Werkstücke erneut gemessen wird und durch Vergleich Abweichungen der Messwerte von dem gespeicherten Standardmesswert festgestellt werden, und wobei das Bearbeitungsprogramm jeweils in Abhängigkeit von den Abweichungen der Messwerte so eingestellt wird, dass sich während der Beschichtung die ursprünglichen Beschichtungsbedingungen ergeben.

Durch die DE 43 26 794 A1 ist ein Verfahren zum Bedrucken von Einzelobjekten bekannt, deren Erstreckung senkrecht zu der mit dem Aufdruck zu versehenen, im wesentlichen ebenen Fläche im allgemeinen relativ klein ist, unter Anwendung zumindest des Offsetdruckverfahrens, wobei die Position der zu bedruckenden Fläche des von einer Halterung gehaltenen Einzelobjektes ermittelt und danach für den Druckvorgang die Offsetdruckeinrichtung und das Objekt relativ zueinander eingestellt werden, um die das Druckbild auf das Objekt übertragende Übertragungsfläche wenigstens eines am Umfang eines rotierenden Druckzylinders vorhandenen Übertragungsmittels in eine für den Druckvorgang günstige Position relativ zum Objekt zu bringen, und wobei dann die Offsetbedruckung durchgeführt wird.

Der Erfindung liegt die Aufgabe zugrunde, eine Bearbeitungsmaschine mit mehreren Bearbeitungsstationen zum Bearbeiten von Körpern zu schaffen, wobei diese Bearbeitungsmaschine auf einfache Weise automatisiert mit einer hohen Positioniergenauigkeit kalibriert werden kann.

Die Aufgabe wird erfindungsgemäß durch die Merkmale des Anspruches 1 gelöst. Die abhängigen Ansprüche betreffen vorteilhafte Ausgestaltungen und/oder Weiterbildungen der gefundenen Lösung.

Die mit der Erfindung erzielbaren Vorteile bestehen insbesondere darin, dass eine Bearbeitungsmaschine mit mehreren Bearbeitungsstationen zum Bearbeiten von Körpern auf einfache Weise automatisiert mit einer hohen Positioniergenauigkeit kalibriert werden kann. Weitere Vorteile sind in Verbindung mit der nachfolgenden Beschreibung ersichtlich.

Ein Ausführungsbeispiel der Erfindung ist in den Zeichnungen dargestellt und wird im Folgenden näher beschrieben.

Es zeigen:
- Fig. 1: eine Bearbeitungsmaschine mit einer Handhabungseinrichtung;
- Fig. 2: eine Bearbeitungsmaschine mit zwei Handhabungseinrichtungen.

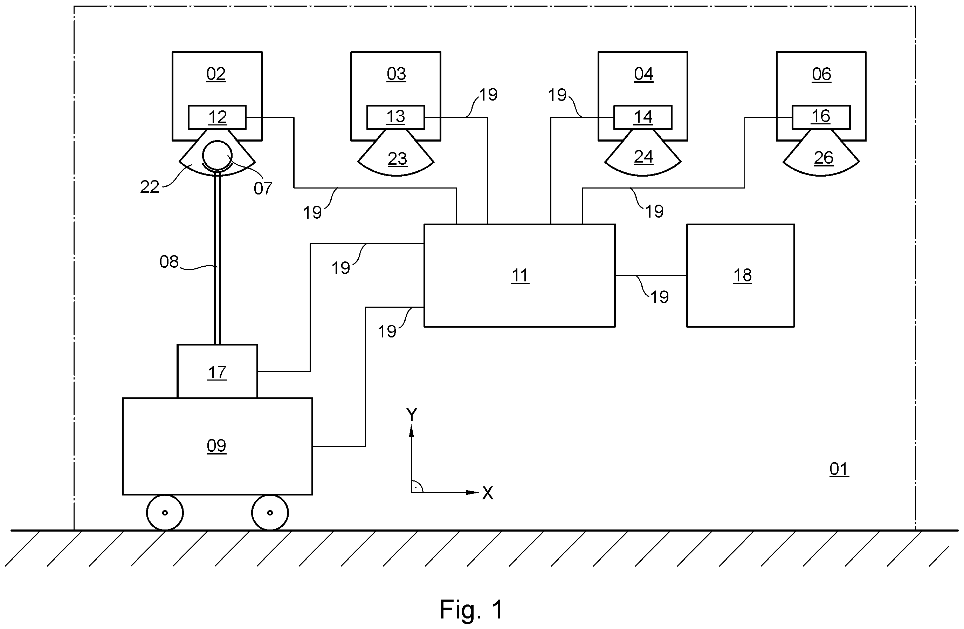

Fig. 1 zeigt beispielhaft stark vereinfacht eine Bearbeitungsmaschine mit mehreren, z. B. vier oder sechs oder acht oder mehr in einem z. B. quaderförmig ausgebildeten Arbeitsraum 01 jeweils insbesondere ortsfest angeordneten Bearbeitungsstationen 02; 03; 04; 06 zum Bearbeiten von Körpern 07. Die zu bearbeitenden Körper 07 werden z. B. mittels einer ersten Fördereinrichtung in diesen z. B. durch eine Einhausung begrenzten Arbeitsraum 01 vorzugsweise automatisiert eingeführt und nach ihrer jeweiligen Bearbeitung z. B. mittels einer zweiten Fördereinrichtung vorzugsweise automatisiert wieder abgeführt oder sind in dieser Weise in den Arbeitsraum 01 der Bearbeitungsmaschine zumindest einführbar und wieder abführbar. Der Arbeitsraum 01 ist innerhalb der Bearbeitungsmaschine somit derjenige Raum, in welchem die einzelnen Bearbeitungsstationen 02; 03; 04; 06 zum Bearbeiten der Körper 07 angeordnet sind und in welchem die Bearbeitung der in diesen Raum eingeführten Körper 07 ausgeführt wird. Die zum Bearbeiten der Körper 07 vorgesehenen Bearbeitungsstationen 02; 03; 04; 06 sind innerhalb des in der Fig. 1 durch eine Umrandung angedeuteten Arbeitsraumes 01 der Bearbeitungsmaschine i. d. R. jeweils an einer z. B. stufenlos wählbaren Position angeordnet, wobei diese Position nach ihrer Wahl zur Ausführung eines bestimmten Bearbeitungsprozesses vorzugsweise fest eingestellt ist. Die jeweiligen Positionen der in dem bestimmten Bearbeitungsprozess zum Bearbeiten der Körper 07 vorgesehenen Bearbeitungsstationen 02; 03; 04; 06 sind jeweils voneinander verschieden und damit voneinander beabstandet. Die Bearbeitungsstationen 02; 03; 04; 06 sind in Transportrichtung der zu bearbeitenden Körper 07 aneinandergereiht, insbesondere linear hintereinander angeordnet, wobei die Transportrichtung der zu bearbeitenden Körper 07 im Wesentlichen von einer im Bereich einer Übergabe der zu bearbeitenden Körper 07 von der ersten Fördereinrichtung in den Arbeitsraum 01 angeordneten Übergabestation zu einer im Bereich einer Übergabe der bearbeiteten Körper 07 vom Arbeitsraum 01 an die zweite Fördereinrichtung angeordneten Übergabestation gerichtet ist. Die Bearbeitungsstationen 02; 03; 04; 06 sind im Arbeitsraum 01 vorzugsweise in einer selben horizontalen Ebene angeordnet. Die Bearbeitungsstationen 02; 03; 04; 06 sind in Transportrichtung der zu bearbeitenden Körper 07 z. B. breitenvariabel ausgebildet. Wenngleich die Bearbeitungsstationen 02; 03; 04; 06 im Arbeitsraum 01 der Bearbeitungsmaschine jeweils i. d. R. ortsfest angeordnet sind, so können sie doch an ihren jeweiligen Positionen jeweils gegen eine andersartige Bearbeitungsstation 02; 03; 04; 06 ausgetauscht und/oder in ihrer jeweiligen Position im Rahmen festgelegter Grenzen bei Bedarf verändert und/oder korrigiert werden, wodurch die Bearbeitungsmaschine für verschiedene Bearbeitungsprozesse flexibel einsetzbar und/oder optimierbar ist. Im Arbeitsraum 01 der Bearbeitungsmaschine können in Abhängigkeit vom jeweiligen Bearbeitungsprozess unterschiedlich viele Bearbeitungsstationen 02; 03; 04; 06 zum Einsatz kommen. Während der Ausführung eines bestimmten Bearbeitungsprozesses können zwar alle im Arbeitsraum 01 der Bearbeitungsmaschine jeweils für eine Bearbeitungsstation 02; 03; 04; 06 vorgesehenen Positionen mit einer Bearbeitungsstation 02; 03; 04; 06 bestückt oder belegt sein, jedoch müssen in diesem bestimmten Bearbeitungsprozesses nicht alle diese Bearbeitungsstationen 02; 03; 04; 06 zum Einsatz kommen, sondern je nach den Erfordernissen des bestimmten Bearbeitungsprozesses wird bzw. ist nur eine Auswahl aus den vorhandenen Bearbeitungsstationen 02; 03; 04; 06 zum Einsatz gebracht. Und nur zu diesen in Abhängigkeit vom vorgegebenen Bearbeitungsprozess ausgewählten Bearbeitungsstationen 02; 03; 04; 06 werden zu bearbeitende Körper 07 gebracht.

In einer bevorzugten Ausführung der Erfindung ist die Bearbeitungsmaschine als eine Druckmaschine ausgebildet oder die Bearbeitungsmaschine weist zumindest eine Druckmaschine auf, wobei mehrere Bearbeitungsstationen 02; 03; 04; 06 jeweils als ein Druckwerk ausgebildet sind. Diese Druckwerke sind derart ausgebildet, dass mit ihnen ein ihnen jeweils zugeführter Körper 07 z. B. in einem Siebdruckverfahren oder in einem druckformlosen Druckverfahren, d. h. in einem Digitaldruckverfahren, bedruckt wird oder zumindest bedruckbar ist. Zur Ausführung des Digitaldruckverfahrens wird z. B. ein Inkjet-Druckwerk oder ein Laser verwendet.

Die Bearbeitungsmaschine bearbeitet in einem Bearbeitungsprozess zumeist mehrere, i. d. R. eine größere Menge, z. B. mehrere tausend Stück an identischen Körpern 07, wobei der jeweilige Körper 07 in dem für ihn vorgesehenen Bearbeitungsprozess insbesondere an seiner Mantelfläche bearbeitet wird. Beispielsweise werden die Körper 07 insbesondere an ihrer Mantelfläche jeweils mit einem vorzugsweise mehrfarbigen Druckbild bedruckt. An dem z. B. durch eine Auswahl oder sonstige Festlegung bestimmten für den Körper 07 vorgesehenen Bearbeitungsprozess sind mindestens zwei der mehreren in dem Arbeitsraum 01 angeordneten Bearbeitungsstationen 02; 03; 04; 06 beteiligt, wobei durch den jeweiligen Bearbeitungsprozess festgelegt ist, welche der im Arbeitsraum 01 der Bearbeitungsmaschine vorhandenen Bearbeitungsstationen 02; 03; 04; 06 und in welcher Reihenfolge die betreffenden Bearbeitungsstationen 02; 03; 04; 06 den jeweiligen Körper 07 bearbeiten.

Die Bearbeitungsmaschine ist vorzugsweise derart ausgebildet, dass mit ihr verschiedene jeweils wählbare oder festlegbare Bearbeitungsprozesse ausführbar sind, wobei jeder dieser ausführbaren Bearbeitungsprozesse jeweils durch die zum Einsatz gebrachten oder zum Einsatz zu bringenden Bearbeitungsstationen 02; 03; 04; 06 und durch die Reihenfolge von deren Einsatz bestimmt ist. Mindestens eine der Bearbeitungsstationen 02; 03; 04; 06 kann als eine die jeweiligen Körper 07 vorbehandelnde oder nachbehandelnde Einrichtung ausgebildet sein, z. B. als ein Lackierwerk oder als ein Trockner zum Trocknen einer Druckfarbe, insbesondere als ein UV-Trockner, oder als eine einen zu bearbeitenden Körper 07 erhitzende Beflammeinrichtung. Die Auswahl oder Festlegung der für den bestimmten Bearbeitungsprozess erforderlichen Bearbeitungsstationen 02; 03; 04; 06 wird z. B. durch eine Eingabe an einer oder in Verbindung mit einer Steuereinrichtung 11 getroffen. Diese Steuereinrichtung 11 ist z. B. als eine elektronische, vorzugsweise digitale, insbesondere frei programmierbare Recheneinheit insbesondere mit mindestens einem Mikroprozessor ausgebildet. Die in Abhängigkeit vom auszuführenden Bearbeitungsprozess getroffene Auswahl der Bearbeitungsstationen 02; 03; 04; 06 reduziert die Zahl der zum Einsatz zu bringenden Bearbeitungsstationen 02; 03; 04; 06 z. B. auf eine Teilmenge der mehreren im selben Arbeitsraum 01 angeordneten Bearbeitungsstationen 02; 03; 04; 06. Die Steuereinrichtung 11 steht vorzugsweise in einem Datenaustausch z. B. mit einem Produktionsplanungssystem 21, kurz auch als PPS-System bezeichnet, wobei ein auszuführender Bearbeitungsprozess von dem Produktionsplanungssystem 21 der Steuereinrichtung 11 vorgegeben ist. Ein PPS-System ist ein Computerprogramm oder ein System aus Computerprogrammen, das den Anwender bei der Produktionsplanung und Produktionssteuerung unterstützt und die damit verbundene Datenverwaltung übernimmt. Ziel eines PPS-Systems ist die Realisierung kurzer Durchlaufzeiten, die Termineinhaltung, optimale Bestandshöhen und die wirtschaftliche Nutzung der Betriebsmittel, d. h. in dem hier vorliegenden Fall der Bearbeitungsmaschine mit ihren Bearbeitungsstationen 02; 03; 04; 06. Da PPS-Systeme i. d. R. nicht für die direkte Steuerung der Produktion und von Produktionsanlagen wie z. B. der Bearbeitungsmaschine mit ihren Bearbeitungsstationen 02; 03; 04; 06 vorgesehen sind, ist für die operative Steuerung der Fertigung ein hier z. B. die Steuereinrichtung 11 aufweisender Fertigungsleitstand vorgesehen, um die Fertigungseinheiten und/oder Fertigungsanlagen hier in Form der Bearbeitungsstationen 02; 03; 04; 06 jeweils zu steuern. Der Fertigungsleitstand, d. h. die Steuereinrichtung 11 erhält vom PPS-System i. d. R. über eine Schnittstelle Fertigungsaufträge, die ihrerseits Soll-Daten bilden. Die erzielten Produktionsergebnisse bilden Ist-Daten und werden z. B. mittels einer Betriebsdatenerfassungseinrichtung erfasst und an das PPS-System zurückgemeldet, wobei das PPS-System diese Ist-Daten im nächsten Planungslauf berücksichtigt. Dadurch kann ein entsprechender Regelkreis zur Produktionssteuerung aufgebaut werden.

Um mehrere dem Arbeitsraum 01 der Bearbeitungsmaschine zugeführte zu bearbeitende Körper 07 jeweils einzeln und nacheinander einer gemäß dem beabsichtigten Bearbeitungsprozess erforderlichen Bearbeitungsstation 02; 03; 04; 06 zuzuführen und von einer Bearbeitungsstation 02; 03; 04; 06 zur nächsten zu transportieren, ist mindestens eine Handhabungseinrichtung 08 vorgesehen. Die betreffende für den Transport der zu bearbeitenden oder bearbeiteten Körper 07 vorgesehene Handhabungseinrichtung 08 weist mindestens einen z. B. elektrischen oder pneumatischen Antrieb 09 auf, wobei dieser mindestens eine Antrieb 09 von der Steuereinrichtung 11 gesteuert oder zumindest steuerbar ist. Die betreffende Handhabungseinrichtung 08 ist oder wird mittels ihres mindestens einen Antriebs 09 in Abhängigkeit von von der Steuereinrichtung 11 ausgegebener Steuerdaten von einer ersten den jeweiligen Körper 07 bearbeitenden Bearbeitungsstation 02; 03; 04; 06 zu mindestens einer nächsten diesen selben Körper 07 bearbeitenden Bearbeitungsstation 02; 03; 04; 06 entlang einer Bewegungsbahn vorzugsweise translatorisch bewegt, wobei die Bewegungsbahn der betreffenden Handhabungseinrichtung 08 vorzugsweise geradlinig ausgebildet ist. Die Bewegungsbahn der betreffenden für den Transport der zu bearbeitenden oder bearbeiteten Körper 07 vorgesehenen Handhabungseinrichtung 08 ist z. B. durch mindestens ein insbesondere lineares Schienensystem vorgegeben und/oder vorzugsweise in einer vertikalen Transportebene angeordnet, wobei die die Bewegungsbahn der betreffenden Handhabungseinrichtung 08 aufweisende vertikale Transportebene jeweils längs zu den Positionen der zum Bearbeiten der Körper 07 vorgesehenen Bearbeitungsstationen 02; 03; 04; 06 angeordnet ist. Die betreffende Handhabungseinrichtung 08 ist vorzugsweise als ein jeweils bidirektional verfahrbares Zweiachssystem ausgebildet, d. h. die betreffende Handhabungseinrichtung 08 weist zwei i. d. R. orthogonal zueinander angeordnete Bewegungsachsen auf, wobei das Zweiachssystem den betreffenden zu bearbeitenden oder bearbeiteten Körper 07 in der vertikalen Transportebene ausgehend z. B. von einer im Bereich der Übergabe der zu bearbeitenden Körper 07 von der ersten Fördereinrichtung in den Arbeitsraum 01 angeordneten Übergabestation der jeweiligen durch den gewählten Bearbeitungsprozess festgelegten Bearbeitungsstation 02; 03; 04; 06 zuführt und anschließend den an der betreffenden Bearbeitungsstation 02; 03; 04; 06 bearbeiteten Körper 07 von dieser Bearbeitungsstation 02; 03; 04; 06 z. B. an die im Bereich der Übergabe der bearbeiteten Körper 07 vom Arbeitsraum 01 an die zweite Fördereinrichtung angeordneten Übergabestation wieder abführt. Die von der betreffenden Handhabungseinrichtung 08 in der vertikalen Transportebene ausgeführten oder zumindest ausführbaren Bewegungen sind in den Figuren jeweils durch die z. B. in einem kartesischen Koordinatensystem angeordneten Bewegungsrichtungen X und Y angedeutet. Ein zu bearbeitender Körper 07 wird vorzugsweise jeweils von unten, d. h. aus einer vertikal tieferen Position an die betreffende, an einer vertikal höheren Position als die betreffende Handhabungseinrichtung 08 angeordneten Bearbeitungsstation 02; 03; 04; 06, z. B. an ein Siebdruckwerk oder an ein Digitaldruckwerk herangeführt oder ist auf diese Weise zumindest heranführbar. Der Transport eines bearbeiteten oder zu bearbeitenden Körpers 07 von einer zur nächsten Bearbeitungsstation 02; 03; 04; 06 erfolgt vorzugsweise unterhalb derjenigen horizontalen Ebene, in welcher die einzelnen Bearbeitungsstationen 02; 03; 04; 06 insbesondere in einer Reihe angeordnet sind.

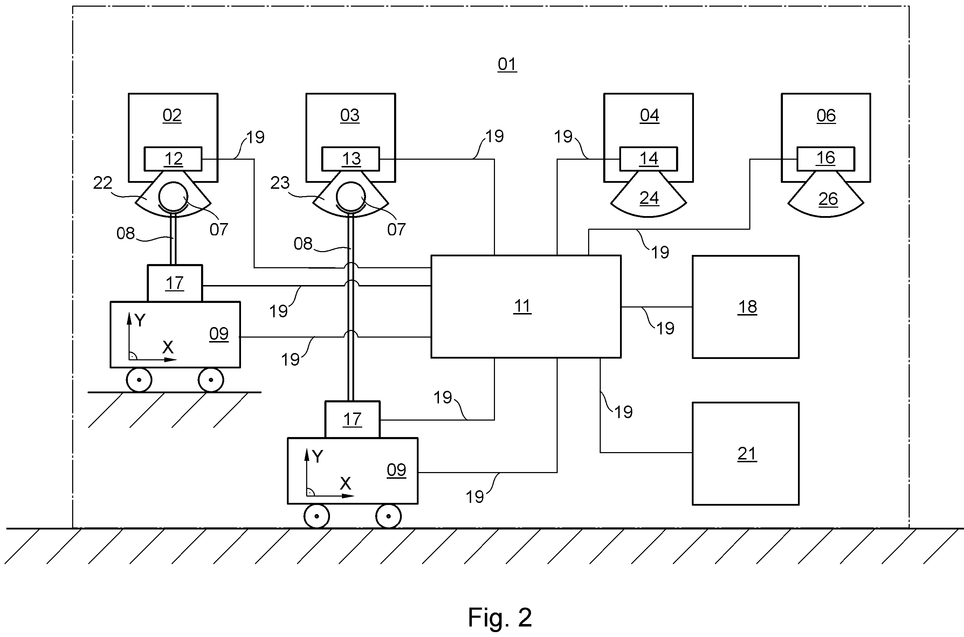

Zur Erhöhung des Massendurchsatzes durch diese Bearbeitungsmaschine, d. h. zur Steigerung ihrer Ausbringungsmenge und/oder zur wirtschaftlicheren Nutzung der Bearbeitungsstationen 02; 03; 04; 06 sind im Arbeitsraum 01 der Bearbeitungsmaschine mehrere, z. B. mindestens zwei oder drei Handhabungseinrichtungen 08 vorgesehen (Fig. 2), die entlang ihrer jeweiligen Bewegungsbahn vorzugsweise zeitgleich betrieben oder zumindest zeitgleich betreibbar sind, wobei diese Bewegungsbahnen vorzugsweise jeweils in einer Transportebene verlaufen, wobei die Transportebenen dieser Handhabungseinrichtungen 08 zusammen mit den Bearbeitungsstationen 02; 03; 04; 06 im selben Arbeitsraum 01 angeordnet sind. Diese mehreren Handhabungseinrichtungen 08 sind z. B. im Wesentlichen baugleich ausgebildet, d. h. mit gleichen Baugruppen ausgestattet. Um in dem Arbeitsraum 01 der Bearbeitungsmaschine einen untereinander und mit den Bearbeitungsstationen 02; 03; 04; 06 kollisionsfreien zeitgleichen Betrieb dieser mehreren Handhabungseinrichtungen 08 zu gewährleisten, ist vorgesehen, dass die jeweiligen Antriebe 09 dieser zeitgleich betriebenen Handhabungseinrichtungen 08 jeweils mittels von der Steuereinrichtung 11 bereit gestellter, insbesondere an diese Antriebe 09 ausgegebener Steuerdaten gesteuert sind, wobei diese Steuerdaten die jeweilige Handhabungseinrichtung 08 sich jeweils entlang mindestens einer Bewegungsbahn vorzugsweise translatorisch bewegen lassen, d. h. durch diese Steuerdaten ist eine Bewegung der jeweiligen Handhabungseinrichtung 08 entlang einer bestimmten Bewegungsbahn vorgegeben, wobei von diesen mehreren im selben Arbeitsraum 01 angeordneten Handhabungseinrichtungen 08 entlang dieser Bewegungsbahnen ausgeführte Bewegungen aufgrund ihrer Programmierung kollisionsfrei ausgebildet sind. Kollisionsfreiheit bedeutet, dass eine im Arbeitsraum 01 bewegte Handhabungseinrichtung 08 zu keinem Zeitpunkt an derselben Position wie eine andere in demselben Arbeitsraum 01 bewegte Handhabungseinrichtung 08 oder eine der in demselben Arbeitsraum 01 angeordneten Bearbeitungsstationen 02; 03; 04; 06 angeordnet ist. Der Kollisionsschutz der mehreren im selben Arbeitsraum 01 angeordneten und zeitgleich betriebenen Handhabungseinrichtungen 08 ist somit nicht hardwaretechnisch, z. B. unter Verwendung von mit der Steuereinrichtung 11 verbundenen und kommunizierenden Sensoren, sondern durch eine entsprechende Antriebssteuerung, d. h. durch entsprechende von der Steuereinrichtung 11 ausgegebene Steuerdaten realisiert. Die Steuerdaten für die Antriebe 09 der jeweiligen Handhabungseinrichtungen 08 sind derart gewählt, dass für die an der Ausführung eines bestimmten Bearbeitungsprozesses beteiligten Handhabungseinrichtungen 08 in dem Arbeitsraum 01 eine denselben Zeitpunkt betreffende Positionsgleichheit ausgeschlossen ist. Durch eine entsprechende in der Steuereinrichtung 11 gespeicherte Programmierung der Bewegungsabläufe, d. h. durch entsprechende Steuerdaten wird eine vorausschauende Kollisionserkennung und/oder Kollisionsvermeidung ermöglicht und auch realisiert. Des Weiteren hat ein durch die Antriebssteuerung realisierter Kollisionsschutz der mehreren im selben Arbeitsraum 01 angeordneten und zeitgleich betriebenen Handhabungseinrichtungen 08 den Vorteil, dass die jeweiligen entlang ihrer Bewegungsbahn auszuführenden Bewegungen dieser mehreren im selben Arbeitsraum 01 angeordneten Handhabungseinrichtungen 08 im Hinblick auf den Massendurchsatz und/oder auf eine vibrationsarme und/oder auf eine in ihrem jeweiligen Lauf ruhige Ausführung programmtechnisch jeweils insbesondere unter Berücksichtigung des vorgesehenen, z. B. von dem Produktionsplanungssystem 21 vorgegebenen Bearbeitungsprozesses bzw. in Abhängigkeit von diesem Bearbeitungsprozess optimiert werden können und/oder auch optimiert sind. Eine derartige in der Steuereinrichtung 11 vorzugsweise automatisiert z. B. mittels mathematischer Verfahren zielgerichtet durchgeführte Optimierung berücksichtigt z. B. eine Phasenverschiebung zwischen zyklisch ausführenden Bewegungsabläufen verschiedener Handhabungseinrichtungen 08 und/oder Wartezeiten und/oder Beschleunigungszeiten oder Abbremszeiten innerhalb der Bewegungsabläufe der am Bearbeitungsprozess beteiligten Handhabungseinrichtungen 08. Die jeweiligen entlang ihrer Bewegungsbahn auszuführenden Bewegungen dieser mehreren im selben Arbeitsraum 01 angeordneten Handhabungseinrichtungen 08 sind dann von der Steuereinrichtung 11 jeweils unter Berücksichtigung einer Phasenverschiebung zwischen zyklisch ausgeführten Bewegungsabläufen verschiedener Handhabungseinrichtungen 08 und/oder von Wartezeiten und/oder von Beschleunigungszeiten oder von Abbremszeiten innerhalb dieser Bewegungsabläufe der am Bearbeitungsprozess beteiligten Handhabungseinrichtungen 08 gesteuert.

Fig. 2 zeigt beispielhaft eine Bearbeitungsmaschine mit mehreren, hier z. B. zwei im selben Arbeitsraum 01 angeordneten und zeitgleich betriebenen oder zumindest betreibbaren Handhabungseinrichtungen 08, wobei diese beiden Handhabungseinrichtungen 08 z. B. in zwei verschiedenen vertikal übereinander und damit beabstandet voneinander angeordneten horizontalen Ebenen angeordnet und in ihrer jeweiligen Ebene z. B. entlang eines Schienensystems jeweils horizontal insbesondere bidirektional bewegt oder zumindest bewegbar sind. Diese vorzugsweise wieder jeweils als ein Zweiachssystem ausgebildeten Handhabungseinrichtungen 08 weisen jeweils z. B. eine Hubeinrichtung auf, mit welcher der von der jeweiligen Handhabungseinrichtung 08 transportierte Körper 07 durch eine vertikale Bewegung der jeweiligen Bearbeitungsstation 02; 03; 04; 06 zugeführt wird oder zumindest zuführbar ist. Natürlich wird die jeweilige Handhabungseinrichtung 08 auch dazu verwendet, einen an einer Bearbeitungsstation 02; 03; 04; 06 bearbeiteten Körper 07 von dort wieder abzuführen, z. B. durch ein Absenken der Hubeinrichtung, und dann in X-Richtung durch eine horizontale Bewegung insbesondere entlang einer horizontalen Linearführung z. B. zu einer nächsten Bearbeitungsstation 02; 03; 04; 06 zu transportieren. Die Hubeinrichtung der jeweiligen Handhabungseinrichtung 08 ist somit in Y-Richtung insbesondere entlang einer vertikalen Linearführung wirksam. Die Bewegungen der jeweiligen Handhabungseinrichtung 08 in X-Richtung und in Y-Richtung werden nacheinander ausgeführt oder sind zumindest nacheinander ausführbar oder vorzugsweise gleichzeitig ausgeführt oder zumindest gleichzeitig ausführbar. Die in der Steuereinrichtung 11 gespeicherte Programmierung für die Bewegungsabläufe dieser beiden Handhabungseinrichtungen 08 sieht z. B. vor, dass bei einer Kollisionsgefahr bzw. zur Kollisionsvermeidung die in der unteren der beiden vertikal übereinander angeordneten Ebenen angeordnete Handhabungseinrichtung 08, d. h. insbesondere deren Hubeinrichtung in eine sichere untere Position fährt bzw. aufgrund der ihren mindestens einen Antrieb 09 steuernden Steuerdaten gefahren ist und damit den Weg für eine horizontale die Bewegungsbahn der in der unteren der beiden vertikal übereinander angeordneten Ebenen angeordneten Handhabungseinrichtung 08 kreuzende Bewegung der in der oberen der beiden vertikal übereinander angeordneten Ebenen angeordneten Handhabungseinrichtung 08 freigibt. Die jeweilige Handhabungseinrichtung 08, insbesondere deren Hubeinrichtung ist z. B. jeweils mit einer Aufnahmeeinrichtung für den jeweiligen zu bearbeitenden Körper 07 ausgestattet, wobei diese Aufnahmeeinrichtung z. B. formatvariabel ausgebildet ist, um an geometrisch unterschiedlich geformte Körper 07 anpassbar zu sein.

In einer weiteren Ausführung einer mehrere Handhabungseinrichtungen 08 aufweisenden Bearbeitungsmaschine kann vorgesehen sein, das der jeweilige Wirkungsbereich einer jeden dieser Handhabungseinrichtungen 08 keine räumliche Überschneidung oder Überlappung mit dem jeweiligen Wirkungsbereich von einer der anderen Handhabungseinrichtungen 08 aufweist. Die jeweiligen Wirkungsbereiche der an dem vorgesehenen Bearbeitungsprozess beteiligten Handhabungseinrichtungen 08 sind somit räumlich voneinander getrennt ausgebildet. Dabei ist zwischen benachbarten Handhabungseinrichtungen 08 z. B. mindestens eine Übergabestation vorgesehen, wobei ein bearbeiteter oder zu bearbeitender Körper 07 an der betreffenden Übergabestation von einer Handhabungseinrichtung 08 zur nächsten übergeben wird oder zumindest übergebbar ist.

Zur weiteren Erhöhung des Massendurchsatzes durch eine gattungsgemäße Bearbeitungsmaschine, d. h. zur weiteren Steigerung ihrer Ausbringungsmenge und/oder zur noch wirtschaftlicheren Nutzung der Bearbeitungsstationen 02; 03; 04; 06 sind in einer vorteilhaften Ausführung der Erfindung in der Bearbeitungsmaschine mehrere vertikale Transportebenen jeweils parallel zueinander und jeweils horizontal voneinander beabstandet angeordnet, wobei in jeder dieser vertikalen Transportebenen jeweils mindestens eine Handhabungseinrichtung 08 angeordnet ist. Die in unterschiedlichen vertikalen Transportebenen agierenden Handhabungseinrichtungen 08 sind vorzugsweise unabhängig voneinander betrieben oder zumindest betreibbar.

Die betreffende Handhabungseinrichtung 08 ist z. B. als ein insbesondere entlang mindestens einer Linearführung durch den betreffenden Antrieb 09 verfahrbarer Roboter, insbesondere Industrieroboter ausgebildet. Die betreffende Handhabungseinrichtung 08 bewirkt in der Bearbeitungsmaschine durch den Transport der zu bearbeitenden Körper 07 einen Materialfluss entlang der in einem bestimmten Bearbeitungsprozess erforderlichen Bearbeitungsstationen 02; 03; 04; 06. Außer dem Transport übt die betreffende Handhabungseinrichtung 08 die Funktion aus, den zu bearbeitenden Körper 07 in einer definierten Pose und/oder Orientierung an der jeweiligen Bearbeitungsstation 02; 03; 04; 06 bereit zu stellen und/oder dort während der Durchführung des bestimmten Bearbeitungsprozesses zu halten. Die betreffende Handhabungseinrichtung 08 übt ihre jeweiligen Funktionen jeweils programmgesteuert aus. Daher ist die jeweilige Handhabungseinrichtung 08 mit der Steuereinrichtung 11 zumindest datentechnisch verbunden, wobei die Steuereinrichtung 11 die jeweilige Funktionen der betreffenden Handhabungseinrichtung 08 steuert.

Zum Bearbeiten eines von der betreffenden Handhabungseinrichtung 08 transportierten Körpers 07 vorgesehene Bearbeitungsstationen 02; 03; 04; 06 weisen jeweils mindestens einen Näherungsschalter 12; 13; 14; 16 jeweils mit einem in die Bewegungsbahn der betreffenden Handhabungseinrichtung 08 ragenden Erfassungsbereich 22; 23; 24; 26 auf. Ein Näherungsschalter 12; 13; 14; 16, der auch als Näherungsinitiator bezeichnet wird, ist ein Sensor, der auf eine Annäherung eines Objektes (hier vorzugsweise eines Körpers 07 und/oder der betreffenden Handhabungseinrichtung 08 und/oder des betreffenden Antriebs 09 der jeweiligen Handhabungseinrichtung 08) an diesen Näherungsschalter 12; 13; 14; 16 reagiert, wobei die Reaktion dieses Sensors ohne direkten Kontakt zwischen Objekt und Näherungsschalter 12; 13; 14; 16, also berührungsfrei erfolgt. Näherungsschalter 12; 13; 14; 16 werden beispielsweise zur Positionserkennung von Objekten eingesetzt. Der Erfassung bzw. Erkennung der Annäherung eines Objektes an den Näherungsschalter 12; 13; 14; 16 liegt z. B. ein induktives oder kapazitives oder magnetisches oder optisches oder Ultraschall basiertes Wirkprinzip zugrunde. Insbesondere wenn die betreffende Bearbeitungsstation 02; 03; 04; 06 in Transportrichtung der zu bearbeitenden Körper 07 z. B. breitenvariabel ausgebildet ist, d. h. in ihrer jeweiligen sich in Transportrichtung der zu bearbeitenden Körper 07 erstreckenden Breite vorzugsweise stufenlos veränderbar ist, sind i. V. m. der betreffenden Bearbeitungsstation 02; 03; 04; 06 mehrere Näherungsschalter 12; 13; 14; 16 vorgesehen, um mit Bezug auf die Breite dieser Bearbeitungsstation 02; 03; 04; 06 z. B. deren Anfang oder Ende zu kennzeichnen.

Die betreffende für den Transport des zu bearbeitenden Körpers 07 vorgesehene Handhabungseinrichtung 08 weist einen mit Bezug auf ihre Bewegungsbahn die jeweilige Position dieser Handhabungseinrichtung 08 angebenden Absolutwertgeber 17 auf. Ein Absolutwertgeber 17 ist ein Längen- oder Winkelmessgerät, das als ein Wegmessgerät eingesetzt wird. Der von einem Absolutwertgeber 17 bereit gestellte absolute Messwert steht ohne Referenzieren unmittelbar nach dem Einschalten des Absolutwertgebers 17 zur Verfügung. Ein Absolutwertgeber 17 gibt eine Lageinformation bzw. einen Positionswert in Form eines digitalen Zahlenwertes aus. Da dieser Zahlenwert über den gesamten Auflösebereich des Absolutwertgebers 17 eindeutig ist, wird keine anfängliche Referenzfahrt benötigt. Dem Ermitteln der aktuellen Lageinformation liegt z. B. ein induktives oder kapazitives oder magnetisches oder optisches Wirkprinzip zugrunde.

Der mindestens eine Näherungsschalter 12; 13; 14; 16 der jeweiligen Bearbeitungsstation 02; 03; 04; 06 und der Absolutwertgeber 17 der jeweiligen Handhabungseinrichtung 08 sind ebenso wie der jeweilige Antrieb 09 der jeweiligen Handhabungseinrichtung 08 jeweils zumindest datentechnisch über ein Leitungssystem 19, z. B. über ein als Datenbussystem ausgebildetes Leitungssystem 19 leitungsgebunden oder drahtlos jeweils mit der Steuereinrichtung 11 verbunden, wobei die Steuereinrichtung 11 i. d. R. eine vorzugsweise digitale Speichereinrichtung 18 aufweist.

Die Bearbeitungsmaschine weist mindestens zwei Betriebszustände auf, nämlich zumindest eine Einlernphase und eine Produktionsphase. In einem ersten Betriebszustand der Bearbeitungsmaschine, d. h. in ihrer Einlernphase ist vorgesehen, dass die Speichereinrichtung 18 den insbesondere vom jeweiligen Absolutwertgeber 17 mit Bezug auf die Bewegungsbahn der betreffenden für den Transport des zu bearbeitenden Körpers 07 vorgesehenen Handhabungseinrichtung 08 angegebenen Positionswert jeweils in Abhängigkeit von einem bestimmten für den oder die jeweiligen Körper 07 vorgesehenen Bearbeitungsprozess speichert, wenn sich diese Handhabungseinrichtung 08 im Erfassungsbereich 22; 23; 24; 26 des betreffenden Näherungsschalters 12; 13; 14; 16 der diesen Näherungsschalter 12; 13; 14; 16 aufweisenden Bearbeitungsstation 02; 03; 04; 06 befindet, d. h. dort angeordnet ist. Während des ersten Betriebszustandes der Bearbeitungsmaschine wird eine Kalibrierfahrt für die betreffende für den Transport des zu bearbeitenden Körpers 07 vorgesehene Handhabungseinrichtung 08 durchgeführt. Die Bearbeitungsmaschine wird mit Hilfe der Kalibrierfahrt auf einen bestimmten Bearbeitungsprozess vorbereitet und anhand der während der Kalibrierfahrt insbesondere mittels des jeweiligen Absolutwertgeber 17 ermittelten Positionswerte für den betreffenden Bearbeitungsprozess eingerichtet. Am Ende der Einlernphase wechselt die Bearbeitungsmaschine vorzugsweise automatisch in ihren zweiten Betriebszustand, d. h. in ihre Produktionsphase und ist sodann in der Lage, Funktionen ihres zweiten Betriebszustandes auszuführen.

In dem zweiten Betriebszustand der Bearbeitungsmaschine ist der betreffende Antrieb 09 der jeweiligen Handhabungseinrichtung 08 von der Steuereinrichtung 11 derart gesteuert, dass die betreffende Handhabungseinrichtung 08 in Abhängigkeit von dem bestimmten für den oder die jeweiligen Körper 07 vorgesehenen Bearbeitungsprozess die im ersten Betriebszustand der Bearbeitungsmaschine in der Speichereinrichtung 18 mit Bezug auf die Bewegungsbahn dieser Handhabungseinrichtung 08 gespeicherten Positionen nacheinander einnimmt. Dieser zweite Betriebszustand der Bearbeitungsmaschine entspricht einer Produktionsphase für diese Bearbeitungsmaschine, bei der die zuvor gespeicherten und damit eingelernten Positionen von der betreffenden Handhabungseinrichtung 08 jeweils in Abhängigkeit von dem bestimmten für den oder die jeweiligen Körper 07 vorgesehenen Bearbeitungsprozess nacheinander angefahren und der oder die jeweilige Körper 07 in der betreffenden Bearbeitungsstation 02; 03; 04; 06 bearbeitet werden.

Um die Positioniergenauigkeit für die betreffende Handhabungseinrichtung 08 zu erhöhen, ist vorgesehen, dass die betreffende Handhabungseinrichtung 08 im ersten Betriebszustand der Bearbeitungsmaschine, d. h. in der Einlernphase jede Bearbeitungsstation 02; 03; 04; 06, die für einen bestimmten für den jeweiligen Körper 07 vorgesehenen Bearbeitungsprozess erforderlich ist, mehrfach anfährt und dass dann, wenn sich diese Handhabungseinrichtung 08 im Erfassungsbereich 22; 23; 24; 26 des betreffenden Näherungsschalters 12; 13; 14; 16 der diesen Näherungsschalter 12; 13; 14; 16 aufweisenden Bearbeitungsstation 02; 03; 04; 06 befindet, der jeweilige mit Bezug auf die Bewegungsbahn der betreffenden für den Transport des zu bearbeitenden Körpers 07 vorgesehenen Handhabungseinrichtung 08 angegebene Positionswert in der Speichereinrichtung 18 gespeichert wird. Das mehrfache, z. B. zweifache Anfahren derselben Bearbeitungsstation 02; 03; 04; 06 erfolgt z. B. während einer Hin- und Rückfahrt der betreffenden Handhabungseinrichtung 08 entlang ihrer vorgegebenen Bewegungsbahn. Zur Ermittlung des im zweiten Betriebszustand der Bearbeitungsmaschine zu verwendenden Positionswertes, d. h. für die Verwendung in der Produktionsphase dieser Bearbeitungsmaschine ist vorgesehen, dass die Steuereinrichtung 11 aus den für eine bestimmte Bearbeitungsstation 02; 03; 04; 06 erfassten Positionswerten einen z. B. arithmetischen Mittelwert errechnet und dann diesen Mittelwert verwendet, um den mindestens einen Antrieb 09 der jeweiligen Handhabungseinrichtung 08 anzusteuern und dadurch die jeweilige Handhabungseinrichtung 08 im zweiten Betriebszustand der Bearbeitungsmaschine auf die zu dieser bestimmten Bearbeitungsstation 02; 03; 04; 06 gehörende Position einzustellen.

Da vorgesehen ist, dass die Speichereinrichtung 18 die vom jeweiligen Absolutwertgeber 17 mit Bezug auf die Bewegungsbahn der betreffenden für den Transport des zu bearbeitenden Körpers 07 vorgesehenen Handhabungseinrichtung 08 angegebenen Positionswert jeweils in Abhängigkeit von einem bestimmten für die jeweiligen Körper 07 vorgesehenen Bearbeitungsprozess speichert, kann die Steuereinrichtung 11 z. B. durch einen Vergleich der aktuellen Produktion mit früheren gleichen Produktionen prüfen, ob die zur Ausführung des beabsichtigten Bearbeitungsprozesses erforderlichen Bearbeitungsstationen 02; 03; 04; 06 vorhanden und korrekt, d. h. z. B. an der richtigen Position montiert sind.

In einer vorteilhaften Weiterbildung der gefundenen Lösung weisen die Bearbeitungsstationen 02; 03; 04; 06 jeweils ein automatisiert lesbares Kennzeichen auf, z. B. ein RFID. Wenn sich eine Handhabungseinrichtung 08 im Erfassungsbereich 22; 23; 24; 26 des betreffenden Näherungsschalters 12; 13; 14; 16 der diesen Näherungsschalter 12; 13; 14; 16 aufweisenden Bearbeitungsstation 02; 03; 04; 06 befindet, kann vorgesehen sein, dass die betreffende das Kennzeichen aufweisende Bearbeitungsstation 02; 03; 04; 06 sich z. B. gegenüber der Handhabungseinrichtung 08 identifiziert und entweder direkt oder via der betreffenden Handhabungseinrichtung 08 eine technische Information bezüglich ihrer Funktion und/oder ihrer Leistungsdaten an die Steuereinrichtung 11 überträgt, so dass diese technische Information in der Speichereinrichtung 18 jeweils zusammen mit dem erfassten Positionswert gespeichert wird. Eine derartige zusätzlich bereit gestellte technische Information lautet beispielsweise: "Siebdruckwerk - 240 mm breit" oder "Digitaldruckwerk - 80 mm breit - Druckfarbe Cyan". Anhand dieser zusätzlich bereit gestellten technischen Information kann der beabsichtigte Bearbeitungsprozess noch besser überprüft werden.

Wenn in der Bearbeitungsmaschine mehreren insbesondere zeitgleich agierende Handhabungseinrichtungen 08 angeordnet sind, ist vorzugsweise vorgesehen, dass diese Handhabungseinrichtungen 08 z. B. unabhängig voneinander vor ihrer jeweiligen Produktionsphase jeweils eine Kalibrierfahrt ausführen.

Des Weiteren ist z. B. vorgesehen, dass die Steuereinrichtung 11 die in der Speichereinrichtung 18 gegebenenfalls zusammen mit weiteren technischen Informationen gespeicherten Positionswerte verschiedener Bearbeitungsstationen 02; 03; 04; 06 dahingehend auswertet, dass sie mit Bezug auf einen bestimmten für den jeweiligen Körper 07 vorgesehenen Bearbeitungsprozess z. B. an einer mit der Steuereinrichtung 11 verbundenen Anzeigeeinrichtung eine Empfehlung für eine optimierte Positionierung der Bearbeitungsstationen 02; 03; 04; 06 im Arbeitsraum 01 und/oder hinsichtlich der Reihenfolge ihres jeweiligen Einsatzes ausgibt.

Es kann vorgesehen sein, dass mindestens eine der Bearbeitungsstationen 02; 03; 04; 06 jeweils eine Positioniereinrichtung aufweist, wobei die Position der betreffenden Bearbeitungsstation 02; 03; 04; 06 mittels der jeweiligen Positioniereinrichtung insbesondere zwecks einer Leistungsoptimierung für einen bestimmten Bearbeitungsprozess automatisiert, d. h. insbesondere durch die Steuereinrichtung 11 gesteuert eingestellt wird oder zumindest einstellbar ist.

Erfindungsgemäß wird eine Bearbeitungsmaschine mit mehreren Bearbeitungsstationen 02; 03; 04; 06 zum Bearbeiten von Körpern 07 vorgeschlagen, wobei mehrere Bearbeitungsstationen 02; 03; 04; 06 jeweils als ein Druckwerk ausgebildet sind, wobei die zum Bearbeiten der Körper 07 vorgesehenen Bearbeitungsstationen 02; 03; 04; 06 jeweils an voneinander verschiedenen Positionen angeordnet sind, wobei mindestens eine Handhabungseinrichtung 08 für den Transport von mindestens einem der zu bearbeitenden Körper 07 vorgesehen ist, wobei die betreffende Handhabungseinrichtung 08 einen von einer Steuereinrichtung 11 gesteuerten Antrieb 09 aufweist und mittels dieses Antriebs 09 von einer den jeweiligen Körper 07 bearbeitenden Bearbeitungsstation 02; 03; 04; 06 zu mindestens einer nächsten diesen Körper 07 bearbeitenden Bearbeitungsstation 02; 03; 04; 06 verfahrbar ist, wobei diese Bearbeitungsmaschine eine Einlernphase und eine Produktionsphase aufweist, wobei vorgesehen ist, dass in der Einlernphase eine mit der Steuereinrichtung 11 verbundene Speichereinrichtung 18 mittels einer von der betreffenden Handhabungseinrichtung 08 ausgeführten Kalibrierfahrt für einen bestimmten Bearbeitungsprozess ermittelte Positionswerte der betreffenden Handhabungseinrichtung 08 speichert, wobei nach einer Umschaltung dieser Bearbeitungsmaschine aus ihrer Einlernphase in ihre Produktionsphase der Antrieb 09 der betreffenden Handhabungseinrichtung 08 von der Steuereinrichtung 11 derart gesteuert ist, dass die betreffende Handhabungseinrichtung 08 die zuvor in der Einlernphase in der Speichereinrichtung 18 für sie gespeicherten Positionen nacheinander einnimmt. Ausgestaltungen dieser vorgeschlagenen Bearbeitungsmaschine sind den beiden Figuren in Verbindung mit der zugehörigen Beschreibung entnehmbar.

### Bezugszeichenliste

- 01: Arbeitsraum
- 02: Bearbeitungsstation
- 03: Bearbeitungsstation
- 04: Bearbeitungsstation
- 05: -
- 06: Bearbeitungsstation
- 07: Körper
- 08: Handhabungseinrichtung
- 09: Antrieb
- 10: -
- 11: Steuereinrichtung
- 12: Näherungsschalter
- 13: Näherungsschalter
- 14: Näherungsschalter
- 15: -
- 16: Näherungsschalter
- 17: Absolutwertgeber
- 18: Speichereinrichtung
- 19: Leitungssystem
- 20: -
- 21: Produktionsplanungssystem
- 22: Erfassungsbereich
- 23: Erfassungsbereich
- 24: Erfassungsbereich
- 25: -
- 26: Erfassungsbereich
- X: Bewegungsrichtung
- Y: Bewegungsrichtung

## Patentansprüche

1. Bearbeitungsmaschine mit mehreren Bearbeitungsstationen (02; 03; 04; 06) zum Bearbeiten von Körpern (07), wobei mehrere Bearbeitungsstationen (02; 03; 04; 06) jeweils als ein Druckwerk ausgebildet sind, wobei die zum Bearbeiten der Körper (07) vorgesehenen Bearbeitungsstationen (02; 03; 04; 06) jeweils an voneinander verschiedenen Positionen angeordnet sind, wobei mindestens eine Handhabungseinrichtung (08) für den Transport von mindestens einem der zu bearbeitenden Körper (07) vorgesehen ist, wobei die betreffende Handhabungseinrichtung (08) einen von einer Steuereinrichtung (11) gesteuerten Antrieb (09) aufweist und mittels dieses Antriebs (09) von einer den jeweiligen Körper (07) bearbeitenden Bearbeitungsstation (02; 03; 04; 06) zu mindestens einer nächsten diesen Körper (07) bearbeitenden Bearbeitungsstation (02; 03; 04; 06) verfahrbar ist, wobei diese Bearbeitungsmaschine eine Einlernphase und eine Produktionsphase aufweist, wobei vorgesehen ist, dass in der Einlernphase eine mit der Steuereinrichtung (11) verbundene Speichereinrichtung (18) mittels einer von der betreffenden Handhabungseinrichtung (08) ausgeführten Kalibrierfahrt für einen bestimmten Bearbeitungsprozess ermittelte Positionswerte der betreffenden Handhabungseinrichtung (08) speichert, wobei nach einem Wechsel dieser Bearbeitungsmaschine von ihrer Einlernphase in ihre Produktionsphase der Antrieb (09) der betreffenden Handhabungseinrichtung (08) von der Steuereinrichtung (11) derart gesteuert ist, dass die betreffende Handhabungseinrichtung (08) die zuvor in der Einlernphase in der Speichereinrichtung (18) für sie gespeicherten Positionen nacheinander einnimmt, **dadurch gekennzeichnet, dass** die betreffende für den Transport der zu bearbeitenden Körper (07) vorgesehene Handhabungseinrichtung (08) derart ausgebildet ist, dass sie mehrere Körper (07) jeweils einzeln und nacheinander von einer zur nächsten Bearbeitungsstation (02; 03; 04; 06) transportiert, wobei zum Bearbeiten eines transportierten Körpers (07) vorgesehene Bearbeitungsstationen (02; 03; 04; 06) jeweils mindestens einen Näherungsschalter (12; 13; 14; 16) jeweils mit einem in eine Bewegungsbahn der betreffenden Handhabungseinrichtung (08) ragenden Erfassungsbereich (22; 23; 24; 26) aufweisen.

2. Bearbeitungsmaschine nach Anspruch 1, **dadurch gekennzeichnet, dass** die betreffende für den Transport des zu bearbeitenden Körpers (07) vorgesehene Handhabungseinrichtung (08) einen mit Bezug auf ihre Bewegungsbahn die jeweilige Position dieser Handhabungseinrichtung (08) angebenden Absolutwertgeber (17) aufweist, wobei zumindest der betreffende Näherungsschalter (12; 13; 14; 16) der jeweiligen Bearbeitungsstation (02; 03; 04; 06) und der Absolutwertgeber (17) der jeweiligen Handhabungseinrichtung (08) jeweils mit der die Speichereinrichtung (18) aufweisenden Steuereinrichtung (11) verbunden sind.

3. Bearbeitungsmaschine nach Anspruch 2, **dadurch gekennzeichnet, dass** in der Einlernphase der Bearbeitungsmaschine vorgesehen ist, dass die Speichereinrichtung (18) einen vom jeweiligen Absolutwertgeber (17) mit Bezug auf die Bewegungsbahn der betreffenden für den Transport des zu bearbeitenden Körpers (07) vorgesehenen Handhabungseinrichtung (08) angegebenen Positionswert jeweils in Abhängigkeit von einem bestimmten für den jeweiligen Körper (07) vorgesehenen Bearbeitungsprozess speichert.

4. Bearbeitungsmaschine nach Anspruch 3, **dadurch gekennzeichnet, dass** die Speichereinrichtung (18) den vom jeweiligen Absolutwertgeber (17) angegebenen Positionswert jeweils dann speichert, wenn die betreffende Handhabungseinrichtung (08) im Erfassungsbereich (22; 23; 24; 26) des betreffenden Näherungsschalters (12; 13; 14; 16) der diesen Näherungsschalter (12; 13; 14; 16) aufweisenden Bearbeitungsstation (02; 03; 04; 06) angeordnet ist.

5. Bearbeitungsmaschine nach Anspruch 1 oder 2 oder 3 oder 4, **dadurch gekennzeichnet, dass** die Bearbeitungsstationen (02; 03; 04; 06) in Transportrichtung der zu bearbeitenden Körper (07) aneinandergereiht und/oder linear hintereinander angeordnet sind.

6. Bearbeitungsmaschine nach Anspruch 1 oder 2 oder 3 oder 4 oder 5, **dadurch gekennzeichnet, dass** die jeweils zur Ausführung ihres jeweiligen Bearbeitungsprozesses vorgesehenen Positionen der Bearbeitungsstationen (02; 03; 04; 06) in einem Arbeitsraum (01) in einer selben horizontalen Ebene angeordnet sind, wobei die Bearbeitungsstationen (02; 03; 04; 06) im Arbeitsraum (01) jeweils ortsfest angeordnet sind.

7. Bearbeitungsmaschine nach Anspruch 6, **dadurch gekennzeichnet, dass** der Transport des zu bearbeitenden Körpers (07) von einer zur nächsten Bearbeitungsstation (02; 03; 04; 06) unterhalb derjenigen horizontalen Ebene erfolgt, in welcher die einzelnen Bearbeitungsstationen (02; 03; 04; 06) angeordnet sind, wobei der zu bearbeitende Körper (07) jeweils aus einer vertikal tieferen Position an die betreffende, an einer vertikal höheren Position als die betreffende Handhabungseinrichtung (08) angeordneten Bearbeitungsstation (02; 03; 04; 06) herangeführt oder zumindest heranführbar ist.

8. Bearbeitungsmaschine nach Anspruch 1 oder 2 oder 3 oder 4 oder 5 oder 6 oder 7, **dadurch gekennzeichnet, dass** mindestens eine der Bearbeitungsstationen (02; 03; 04; 06) als eine die jeweiligen Körper (07) vorbehandelnde oder nachbehandelnde Einrichtung in Form eines Lackierwerkes oder eines Trockners, insbesondere eines UV-Trockner, oder einer Beflammeinrichtung ausgebildet ist.

9. Bearbeitungsmaschine nach Anspruch 1 oder 2 oder 3 oder 4 oder 5 oder 6 oder 7 oder 8, **dadurch gekennzeichnet, dass** die im Arbeitsraum (01) angeordneten Bearbeitungsstationen (02; 03; 04; 06) an ihren jeweiligen Positionen jeweils gegen eine andersartige Bearbeitungsstation (02; 03; 04; 06) austauschbar sind.

10. Bearbeitungsmaschine nach Anspruch 1 oder 2 oder 3 oder 4 oder 5 oder 6 oder 7 oder 8 oder 9, **dadurch gekennzeichnet, dass** die betreffende Handhabungseinrichtung (08) entlang ihrer Bewegungsbahn translatorisch und/oder bidirektional bewegt ist und/oder dass die Bewegungsbahn der betreffenden Handhabungseinrichtung (08) geradlinig ausgebildet ist.

11. Bearbeitungsmaschine nach Anspruch 1 oder 2 oder 3 oder 4 oder 5 oder 6 oder 7 oder 8 oder 9 oder 10, **dadurch gekennzeichnet, dass** die betreffende Handhabungseinrichtung (08) als ein verfahrbares Zweiachssystem ausgebildet ist, wobei das Zweiachssystem den betreffenden zu bearbeitenden Körper (07) der jeweiligen Bearbeitungsstation (02; 03; 04; 06) zuführt und von dort wieder abführt.

12. Bearbeitungsmaschine nach Anspruch 1 oder 2 oder 3 oder 4 oder 5 oder 6 oder 7 oder 8 oder 9 oder 10 oder 11, **dadurch gekennzeichnet, dass** vorgesehen ist, dass die Steuereinrichtung (11) aus mehreren in der Einlernphase der Bearbeitungsmaschine für eine bestimmte Bearbeitungsstation (02; 03; 04; 06) erfassten Positionen einen Mittelwert errechnet und in der Produktionsphase der Bearbeitungsmaschine anhand dieses Mittelwertes die jeweilige Handhabungseinrichtung (08) auf die zu dieser bestimmten Bearbeitungsstation (02; 03; 04; 06) gehörende Position einstellt.

13. Bearbeitungsmaschine nach Anspruch 1 oder 2 oder 3 oder 4 oder 5 oder 6 oder 6 oder 7 oder 8 oder 9 oder 10 oder 11 oder 12, **dadurch gekennzeichnet, dass** mindestens eine Bearbeitungsstation (02; 03; 04; 06) ein automatisiert lesbares Kennzeichen aufweist, wobei vorgesehen ist, dass die betreffende das Kennzeichen aufweisende Bearbeitungsstation (02; 03; 04; 06) entweder direkt oder via der betreffenden Handhabungseinrichtung (08) eine technische Information bezüglich ihrer Funktion und/oder ihrer Leistungsdaten an die Steuereinrichtung (11) überträgt, so dass diese technische Information in der Speichereinrichtung (18) jeweils zusammen mit dem erfassten Positionswert gespeichert wird oder zumindest speicherbar ist.

14. Bearbeitungsmaschine nach Anspruch 1 oder 2 oder 3 oder 4 oder 5 oder 6 oder 7 oder 8 oder 9 oder 10 oder 11 oder 12 oder 13, **dadurch gekennzeichnet, dass** vorgesehen ist, dass die Steuereinrichtung (11) die in der Speichereinrichtung (18) gespeicherten Positionswerte und/oder weiteren technischen Informationen verschiedener Bearbeitungsstationen (02; 03; 04; 06) dahingehend auswertet, dass sie mit Bezug auf einen bestimmten für den jeweiligen Körper (07) vorgesehenen Bearbeitungsprozess eine Empfehlung für eine optimierte Positionierung der Bearbeitungsstationen (02; 03; 04; 06) und/oder hinsichtlich der Reihenfolge ihres jeweiligen Einsatzes ausgibt.

15. Bearbeitungsmaschine nach Anspruch 1 oder 2 oder 3 oder 4 oder 5 oder 6 oder 7 oder 8 oder 9 oder 10 oder 11 oder 12 oder 13 oder 14, **dadurch gekennzeichnet, dass** die Bearbeitungsmaschine als eine Druckmaschine ausgebildet ist.

## Claims

1. A processing machine with a plurality of processing stations (02; 03; 04; 06) for processing bodies (07), wherein a plurality of processing stations (02; 03; 04; 06) are each configured as a printing unit, wherein the processing stations (02; 03; 04; 06) provided for processing the bodies (07) are arranged in each case at positions different from one another, wherein at least one handling device (08) is provided for the transport of at least one of the bodies (07) to be processed, wherein the relevant handling device (08) has a drive (09) controlled by a controller (11) and by means of this drive (09) it is possible to travel from one processing station (02; 03; 04; 06) processing the respective body (07) to at least a next processing station (02; 03; 04; 06) processing this body (07), wherein this processing machine has a learning phase and a production phase, wherein provision is made that in the learning phase a memory device (18) connected to the controller (11) stores position values of the relevant handling device (08) determined for a specified processing procedure by means of a calibration travel executed by the relevant handling device (08), wherein after switching of this processing machine from its learning phase to its production phase the drive (09) of the relevant handling device (08) is controlled by the controller (11) such that the relevant handling device (08) occupies in succession the positions stored in the storage device (18) for it previously in the learning phase, **characterized in that** the relevant handling device (08) provided for the transport of the bodies (07) to be processed is configured such, that it transports a plurality of bodies (07), in each case individually and in succession, from one processing station (02; 03; 04; 06) to the next, wherein processing stations (02; 03; 04; 06) provided for the processing of a transported body (07) each have at least one proximity sensor (12; 13; 14; 16) in each case with a detection region (22; 23; 24; 26) protruding into the movement path of the relevant handling device (08).

2. The processing machine according to claim 1, **characterized in that** the relevant handling device (08) provided for the transport of the body (07) to be processed has an absolute encoder (17) indicating the respective position of this handling device (08) with reference to its movement path, wherein at least the relevant proximity sensor (12; 13; 14; 16) of the respective processing station (02; 03; 04; 06) and the absolute encoder (17) of the respective handling device (08) are each connected to the controller (11) having the memory device (18).

3. The processing machine according to claim 2, **characterized in that** in the learning phase of the processing machine provision is made that the storage device (18) stores a position value that has been specified by the respective absolute encoder (17) with reference to the movement path of the relevant handling device (08) provided for the transport of the body (07) to be processed, in each case depending on a specified processing procedure provided for the respective body (07).

4. The processing machine according to claim 3, **characterized in that** the memory device (18) stores the position value that has been specified by the respective absolute encoder (17) when the relevant handling device (08) is located in the detection region (22; 23; 24; 26) of the relevant proximity sensor (12; 13; 14; 16) of the processing station (02; 03; 04; 06) having this proximity sensor (12; 13; 14; 16).

5. The processing machine according to claim 1 or 2 or 3 or 4, **characterized in that** the processing stations (02; 03; 04; 06) are arranged in a row and/or linearly in a row in the transport direction of the bodies (07) to be processed.

6. The processing machine according to claim 1 or 2 or 3 or 4 or 5, **characterized in that** the respective positions of the processing stations (02; 03; 04; 06) provided respectively for the execution of their respective processing procedure are arranged in a working space (01) on a same horizontal plane, wherein the processing stations (02; 03; 04; 06) are each stationary arranged in the working space (01).

7. The processing machine according to claim 6, **characterized in that** the transport of the body (07) to be processed from one processing station (02; 03; 04; 06) to the next occurs below the horizontal plane, in which the individual processing stations (02; 03; 04; 06) are arranged, wherein the body (07) to be processed is conducted or at least can be conducted from a vertically lower position to the relevant processing station (02; 03; 04; 06) arranged at a vertically higher position than the relevant handling device (08).

8. The processing machine according to claim 1 or 2 or 3 or 4 or 5 or 6 or 7, **characterized in that** at least one of the processing stations (02; 03; 04; 06) is configured as a device for pre-processing or post-processing the respective bodies (07),in the form of a coating unit or a dryer, in particular a UV-dryer, or a flame treatment system.

9. The processing machine according to claim 1 or 2 or 3 or 4 or 5 or 6 or 7 or 8, **characterized in that** the processing stations (02; 03; 04; 06) arranged in the working space (01) can be in each case exchanged at their respective positions for another type of processing station (02; 03; 04; 06).

10. The processing machine according to claim 1 or 2 or 3 or 4 or 5 or 6 or 7 or 8 or 9, **characterized in that** the relevant handling device (08) is moved translationally and/or bidirectionally along its movement path and/or that the movement path of the relevant handling device (08) is rectilinear.

11. The processing machine according to claim 1 or 2 or 3 or 4 or 5 or 6 or 7 or 8 or 9 or 10, **characterized in that** the relevant handling device (08) is configured as a movable two-axis system, wherein the two-axis system feeds the relevant bodies (07) to be processed to the respective processing station (02; 03; 04; 06) and conducts it away from there again.

12. The processing machine according to claim 1 or 2 or 3 or 4 or 5 or 6 or 7 or 8 or 9 or 10 or 11, **characterized in that** provision is made that the controller (11) calculates an arithmetic mean from a plurality of positions values acquired for a specified processing station (02; 03; 04; 06) in the learning phase of the processing machine, and in the production phase of the processing machine, it uses this mean to adjust the respective handling device (08) to the position belonging to this specified processing station (02; 03; 04; 06).

13. The processing machine according to claim 1 or 2 or 3 or 4 or 5 or 6 or 7 or 8 or 9 or 10 or 11 or 12, **characterized in that** at least one processing station (02; 03; 04; 06) has an automatically readable tag, wherein provision is made that the relevant processing station (02; 03; 04; 06) having the tag transmits technical information regarding its function and/or its performance data to the controller (11) either directly or via the relevant handling device (08), so that this technical information will be or at least can be stored in the storage device (18) in each case together with the acquired position value.

14. The processing machine according to claim 1 or 2 or 3 or 4 or 5 or 6 or 7 or 8 or 9 or 10 or 11 or 12 or 13, **characterized in that** provision is made that the controller (11) evaluates the position values stored in the storage device (18) and/or further technical information of different processing stations (02; 03; 04; 06) to the effect that it outputs a recommendation for an optimized positioning of the processing stations (02; 03; 04; 06) and/or with respect to the order of their respective use with reference to a specified processing procedure provided for the respective body (07).

15. The processing machine according to claim 1 or 2 or 3 or 4 or 5 or 6 or 7 or 8 or 9 or 10 or 11 or 12 or 13 or 14, **characterized in that** the processing machine is configured as a printing press.

## Revendications

1. Machine de traitement avec plusieurs postes de traitement (02 ; 03 ; 04 ; 06) destinée à traiter des corps (07), dans laquelle plusieurs postes de traitement (02 ; 03 ; 04 ; 06) sont respectivement conçus en tant que groupe d'impression, dans laquelle les postes de traitement (02 ; 03 ; 04 ; 06) prévus pour traiter les corps (07) sont respectivement agencés en des positions différentes les unes des autres, dans laquelle au moins un dispositif de manipulation (08) est prévu pour le transport d'au moins un des corps (07) à traiter, dans laquelle le dispositif de manipulation (08) concerné présente un entraînement (09) commandé par un dispositif de commande (11) et peut être déplacé, au moyen de cet entraînement (09), d'un poste de traitement (02 ; 03 ; 04 ; 06) qui traite le corps (07) respectif à au moins un poste de traitement (02 ; 03 ; 04 ; 06) suivant qui traite ce corps (07), dans laquelle cette machine de traitement présente une phase d'apprentissage et une phase de production, dans laquelle il est prévu que, dans la phase d'apprentissage, un dispositif de stockage (18) relié au dispositif de commande (11) stocke, au moyen d'un déplacement d'étalonnage exécuté par le dispositif de manipulation (08) concerné pour un processus de traitement déterminé, des valeurs de position établies du dispositif de manipulation (08) concerné, dans laquelle, après un passage de cette machine de traitement de sa phase d'apprentissage à sa phase de production, l'entraînement (09) du dispositif de manipulation (08) concerné est commandé par le dispositif de commande (11) de telle sorte que le dispositif de manipulation (08) concerné occupe successivement les positions précédemment stockées pour lui dans le dispositif de stockage (18) au cours de la phase d'apprentissage, **caractérisée en ce que** le dispositif de manipulation (08) concerné prévu pour le transport des corps (07) à traiter est conçu de telle sorte qu'il transporte plusieurs corps (07) respectivement individuellement et successivement d'un poste de traitement (02 ; 03 ; 04 ; 06) au suivant, dans laquelle, pour le traitement d'un corps (07) transporté, des postes de traitement (02 ; 03 ; 04 ; 06) prévus présentent respectivement au moins un détecteur de proximité (12 ; 13 ; 14 ; 16) respectivement avec un champ de saisie (22 ; 23 ; 24 ; 26) qui dépasse jusque dans une bande de déplacement du dispositif de manipulation (08) concerné.

2. Machine de traitement selon la revendication 1, **caractérisée en ce que** le dispositif de manipulation (08) concerné prévu pour le transport des corps (07) à traiter présente un indicateur de valeur absolue (17) qui indique, par rapport à sa bande de déplacement, la position respective de ce dispositif de manipulation (08), dans laquelle au moins le détecteur de proximité (12 ; 13 ; 14 ; 16) concerné du poste de traitement (02 ; 03 ; 04 ; 06) respectif et l'indicateur de valeur absolue (17) du dispositif de manipulation (08) respectif sont respectivement reliés au dispositif de commande (11) qui présente le dispositif de stockage (18).

3. Machine de traitement selon la revendication 2, **caractérisée en ce que**, dans la phase d'apprentissage de la machine de traitement, il est prévu que le dispositif de stockage (18) stocke une valeur de position indiquée par l'indicateur de valeur absolue (17) respectif par rapport à la bande de déplacement du dispositif de manipulation (08) concerné prévu pour le transport du corps (07) à traiter respectivement en fonction d'un processus de traitement déterminé prévu pour le corps (07) respectif.

4. Machine de traitement selon la revendication 3, **caractérisée en ce que** le dispositif de stockage (18) stocke respectivement la valeur de position indiquée par l'indicateur de valeur absolue (17) respectif dès lors que le dispositif de manipulation (08) concerné est agencé dans le champ de saisie (22 ; 23 ; 24 ; 26) du détecteur de proximité (12 ; 13 ; 14 ; 16) concerné du poste de traitement (02 ; 03 ; 04 ; 06) qui présente ce détecteur de proximité (12 ; 13 ; 14 ; 16).

5. Machine de traitement selon la revendication 1 ou 2 ou 3 ou 4, **caractérisée en ce que** les postes de traitement (02 ; 03 ; 04 ; 06) sont agencés de façon à se suivre les uns derrière les autres et/ou être alignés les uns derrière les autres dans la direction de transport des corps (07) à traiter.

6. Machine de traitement selon la revendication 1 ou 2 ou 3 ou 4 ou 5, **caractérisée en ce que** les positions des postes de traitement (02 ; 03 ; 04 ; 06) respectivement prévues pour l'exécution de leurs processus de traitement respectifs sont agencées dans un espace de travail (01) dans un même plan horizontal, dans laquelle les postes de traitement (02 ; 03 ; 04 ; 06) sont respectivement agencés de façon stationnaire dans l'espace de travail (01).

7. Machine de traitement selon la revendication 6, **caractérisée en ce que** le transport du corps (07) à traiter d'un poste de traitement (02 ; 03 ; 04 ; 06) au suivant s'effectue en-dessous du plan horizontal dans lequel les postes de traitement (02 ; 03 ; 04 ; 06) individuels sont agencés, dans laquelle le corps (07) à traiter est ou au moins peut être respectivement rapproché d'une position verticale plus basse jusque contre le poste de traitement (02 ; 03 ; 04 ; 06) concerné agencé en une position verticale plus élevée que celle du dispositif de manipulation (08) concerné.

8. Machine de traitement selon la revendication 1 ou 2 ou 3 ou 4 ou 5 ou 6 ou 7, **caractérisée en ce qu'**au moins un des postes de traitement (02 ; 03 ; 04 ; 06) est conçu en tant que dispositif de pré-traitement ou de post-traitement des corps (07) respectifs sous la forme d'un unité de laquage ou d'un sécheur, en particulier un sécheur à UV, ou d'un dispositif d'inflammation.

9. Machine de traitement selon la revendication 1 ou 2 ou 3 ou 4 ou 5 ou 6 ou 7 ou 8, **caractérisée en ce que** les postes de traitement (02 ; 03 ; 04 ; 06) agencés dans l'espace de travail (01) peuvent être respectivement échangés dans leurs positions respectives contre un poste de traitement (02 ; 03 ; 04 ; 06) différent.

10. Machine de traitement selon la revendication 1 ou 2 ou 3 ou 4 ou 5 ou 6 ou 7 ou 8 ou 9, **caractérisée en ce que** le dispositif de manipulation (08) concerné est déplacé par translation et/ou de façon bidirectionnelle le long de sa bande de déplacement, et/ou **en ce que** la bande de déplacement du dispositif de manipulation (08) concerné est conçue de façon rectiligne.

11. Machine de traitement selon la revendication 1 ou 2 ou 3 ou 4 ou 5 ou 6 ou 7 ou 8 ou 9 ou 10, **caractérisée en ce que** le dispositif de manipulation (08) concerné est conçu en tant que système à deux axes déplaçable, dans laquelle le système à deux axes déplaçable amène et de là éloigne à nouveau le corps (07) à traiter concerné du poste de traitement (02 ; 03 ; 04 ; 06) respectif.

12. Machine de traitement selon la revendication 1 ou 2 ou 3 ou 4 ou 5 ou 6 ou 7 ou 8 ou 9 ou 10 ou 11, **caractérisée en ce qu'**il est prévu que le dispositif de commande (11) calcule une valeur moyenne à partir de plusieurs positions saisies au cours de la phase d'apprentissage de la machine de traitement pour un poste de traitement (02 ; 03 ; 04 ; 06) déterminé, et, au cours de la phase de production de la machine de traitement, règle, sur la base de cette valeur moyenne, le dispositif de manipulation (08) respectif sur la position qui appartient à ce poste de traitement (02 ; 03 ; 04 ; 06) déterminé.

13. Machine de traitement selon la revendication 1 ou 2 ou 3 ou 4 ou 5 ou 6 ou 7 ou 8 ou 9 ou 10 ou 11 ou 12, **caractérisée en ce qu'**au moins un poste de traitement (02 ; 03 ; 04 ; 06) présente une marque automatiquement lisible, dans laquelle il est prévu que le poste de traitement (02 ; 03 ; 04; 06) concerné qui présente la marque transmette au dispositif de commande (11), soit directement soit via le dispositif de manipulation (08) concerné, une information technique relative à sa fonction et/ou ses données de performance, de sorte que cette information technique soit ou au moins puisse être stockée dans le dispositif de stockage (18) respectivement ensemble avec la valeur de position saisie.

14. Machine de traitement selon la revendication 1 ou 2 ou 3 ou 4 ou 5 ou 6 ou 7 ou 8 ou 9 ou 10 ou 11 ou 12 ou 13, **caractérisée en ce qu'**il est prévu que partant de là le dispositif de commande (11) exploite les valeurs de position stockées dans le dispositif de stockage (18) et/ou d'autres informations techniques de divers postes de traitement (02 ; 03 ; 04 ; 06), qu'il produise, en lien avec un processus de traitement déterminé prévu pour le corps (07) respectif, une recommandation pour un positionnement optimisé des postes de traitement (02 ; 03 ; 04 ; 06) et/ou relativement à l'enchaînement de son intervention respective.

15. Machine de traitement selon la revendication 1 ou 2 ou 3 ou 4 ou 5 ou 6 ou 7 ou 8 ou 9 ou 10 ou 11 ou 12 ou 13 ou 14, **caractérisée en ce que** la machine de traitement est conçue en tant que machine à imprimer.
